# EUROPEAN PATENT APPLICATION

(11) **EP 3 825 443 A1**
(43) Date of publication of application: **26.05.2021**
(21) Application number: 20208407.5
(22) Date of filing: 18.11.2020
(51) Int. Cl.: C25B 1/04, C25B 11/054, C25B 11/067, C25B 11/081, B01J 23/46, B01J 37/03

(54) **METHOD OF PREPARING CATALYST FOR PEM WATER ELECTROLYSIS AND CATALYST FOR PEM WATER ELECTROLYSIS**

(30) Priority: 22.11.2019 KR 20190151153; 10.08.2020 KR 20200100013
(71) Applicant: Korea Institute of Energy Research, Daejeon 34129 (KR)
(72) Inventor: KIM, Sang Kyung, 34097 Yuseong-gu, Daejeon (KR); ISLAM, Jahowa, 34138 Yuseong-gu, Daejeon (KR); KIM, Chang Hee, 35205 Seo-gu, Daejeon (KR); CHO, Won Chul, 34101 Yuseong-gu, Daejeon (KR); CHO, Hyun Seok, 34082 Yuseong-gu, Deajeon (KR); KIM, Min Joong, 30130 Sejong-si (KR)
(74) Representative: Pfenning, Meinig & Partner mbB

(57) **Abstract**

The present invention provides a method of preparing a catalyst for PEM water electrolysis, which includes dispersing boron carbide (B₄C) in water to prepare an aqueous boron carbide solution; adding an iridium (Ir) precursor to the aqueous boron carbide solution to prepare a mixed solution; adjusting acidity of the mixed solution to be in a basic region; and adding a reducing agent to the mixed solution and stirring the mixture to form Ir/B₄C composite nanoparticles. The catalyst for PEM water electrolysis prepared by the method has high durability and a large specific surface area.

## Description

### BACKGROUND OF THE INVENTION

### Field of the Invention

The present invention relates to a method of preparing a catalyst for PEM water electrolysis and a catalyst for PEM water electrolysis. More particularly, the present invention relates to a catalyst for PEM water electrolysis having iridium nanoparticles formed on the surface of boron carbide as a support so as to have a large specific surface area and high durability.

### Description of the Related Art

Recently, the demand for new and renewable energy has rapidly increased, and research on this has been actively conducted. In connection with new and renewable energy such as solar power, wind power, and tidal power, the research and development of technologies in which surplus electric energy is used in the water electrolysis stack to produce hydrogen and the produced hydrogen is stored, then supplied to fuel cells, and used when energy is needed is underway as a new form of energy storage.

Among various hydrogen production methods, the water electrolysis technology is largely divided into alkaline water electrolysis, solid oxide electrolysis, and polymer electrolyte membrane water electrolysis. Among these, the polymer electrolyte membrane water electrolysis (hereinafter, PEM water electrolysis) technology does not require the use of a corrosive solution, thus mixing of the produced gas does not occur, and as water is the only circulating liquid, and problems such as corrosion are not caused.

One of the important components in PEM water electrolysis is the membrane electrode assembly (MEA), and the development of hydrogen and oxygen evolution reaction (OER) catalysts is essential. Particularly in the water electrolysis reaction, the decrease in efficiency is greatly affected by the oxygen overpotential, and research on the catalysts involved in the decrease in overpotential in the reaction for oxygen generation have been diversely conducted.

Iridium oxide (IrO₂) and ruthenium oxide (RuO₂) have been reported as representative OER catalysts, but these correspond to expensive noble metal catalysts. In particular, ruthenium oxide exhibits excellent catalytic activity in the initial state but is hardly used for a long time because of its low stability.

There is a growing need for a technology for preparing a catalyst having a novel structure so as to exhibit excellent electrochemical activity and durability at the same time.

### Citation List

### Patent Literature

Patent Literature 1: Korean Patent Publication No. 10-2014-0108212

### SUMMARY OF THE INVENTION

In order to improve the above technical problems, a technical object of the present invention is to provide a method of preparing a catalyst for PEM water electrolysis containing Ir/B₄C composite nanoparticles.

Another technical object of the present invention is to provide a catalyst for PEM water electrolysis prepared by the above preparation method.

The technical objects to be achieved by the present invention are not limited to the technical objects mentioned above, and other technical objects that are not mentioned will be clearly understood by those skilled in the art to which the present invention pertains from the following description.

In order to achieve the above technical objects, an aspect of the present invention provides a method of preparing a catalyst for PEM water electrolysis, which includes dispersing boron carbide (B₄C) in water to prepare an aqueous boron carbide solution; adding an iridium (Ir) precursor to the aqueous boron carbide solution to prepare a mixed solution; adjusting acidity of the mixed solution to be in a basic region; and adding a reducing agent to the mixed solution and stirring the mixture to form Ir/B₄C composite nanoparticles.

In an embodiment of the present invention, the step of adjusting the acidity to be in a basic region may be performed by adjusting the pH to 9 to 11.

In an embodiment of the present invention, iridium nanoparticles may be formed on the surface of boron carbide particles in the step of forming Ir/B₄C composite nanoparticles.

In an embodiment of the present invention, iridium nanoparticles may be formed to be contained at 5 wt% to 40 wt% with respect to 100 wt% of Ir/B₄C composite nanoparticles in the step of forming Ir/B₄C composite nanoparticles.

In an embodiment of the present invention, the method may further include a step of washing and filtering; and a step of drying after the step of forming Ir/B₄C composite nanoparticles.

In an embodiment of the present invention, the step of step may be performed at 50°C to 70°C.

In an embodiment of the present invention, the iridium precursor may be at least one compound selected from the group consisting of chloroiridic acid, iridium fluoride, iridium chloride, iridium bromide, iridium iodide, iridium acetate, iridium acetyl acetonate, iridium nitrate, and hydrates thereof.

In an embodiment of the present invention, the step of forming Ir/B₄C composite nanoparticles may be performed at a temperature of 60°C to 100°C for 10 to 60 minutes.

In an embodiment of the present invention, iridium nanoparticles may be formed to be dispersed and located on a surface of boron carbide particles in the step of forming Ir/B₄C composite nanoparticles.

In an embodiment of the present invention, the size of the iridium nanoparticles may be 1 nm to 3 nm.

An aspect of the present invention provides a catalyst for PEM water electrolysis containing a boron carbide support; and iridium nanoparticles located on the surface of the boron carbide support.

In an embodiment of the present invention, the iridium nanoparticles may be contained at 5 wt% to 40 wt% with respect to 100 wt% of the catalyst for PEM water electrolysis.

In an embodiment of the present invention, the iridium nanoparticles may include iridium metal, iridium oxide, and a combination thereof.

In an embodiment of the present invention, the diameter of the boron carbide support may be 100 nm to 100 µm.

In an embodiment of the present invention, the BET surface area of the catalyst for PEM water electrolysis may be 10 m²/g to 500 m²/g.

In an embodiment of the present invention, the iridium nanoparticles may be dispersed and located on the surface of boron carbide particles.

In an embodiment of the present invention, the size of the iridium nanoparticles may be 1 nm to 3 nm.

### BRIEF DESCRIPTION OF THE DRAWINGS

FIG. 1 is a flow chart of a method of preparing a catalyst for PEM water electrolysis of the present invention;
FIG. 2 is a graph illustrating the results of an experiment on the thermal stability of boron carbide;
FIG. 3 is a schematic diagram of iridium nanoparticles formed on the surface of boron carbide particles in an embodiment of the present invention;
FIG. 4 is TEM analysis results of a catalyst for PEM water electrolysis (nanocluster Ir/B₄C) according to an embodiment of the present invention;
FIGS. 5 and 6 are XRD analysis results and XPS analysis results of the catalyst for PEM water electrolysis (nanocluster Ir/B₄C) in FIG. 4, respectively;
FIG. 7 is TEM analysis results of a catalyst for PEM water electrolysis (nanoparticle Ir/B₄C) according to an embodiment of the present invention;
FIGS. 8 and 9 are XRD analysis results and XPS analysis results of the catalyst for PEM water electrolysis (nanoparticle Ir/B₄C) in FIG. 7, respectively;
FIG. 10 is comparison results on OER activity of a catalyst for PEM water electrolysis of an embodiment of the present invention and Comparative Example;
FIG. 11 is results of an experiment for durability examination of a catalyst for PEM water electrolysis (nanocluster Ir/B₄C) of an embodiment of the present invention and Comparative Example;
FIG. 12 is results of an experiment for durability examination of a catalyst for PEM water electrolysis according to an embodiment of the present invention;
FIG. 13 is XPS analysis results of a catalyst for PEM water electrolysis according to an embodiment of the present invention; and
FIG. 14 is (a) a TEM image and (b) a current density graph.

### DETAILED DESCRIPTION OF THE PREFERRED EMBODIMENTS

Hereinafter, the present invention will be described with reference to the accompanying drawings. However, the present invention may be implemented in various different forms and therefore is not limited to the embodiments described herein. In the drawings, parts irrelevant to the description are omitted in order to clearly describe the present invention, and similar reference numerals are assigned to similar parts throughout the specification.

Throughout the specification, when a part is said to be "connected (linked, contacted, coupled)" with another part, this includes not only the case of being "directly connected" but also the case of being "indirectly connected" with another member interposed therebetween. In addition, when a part "includes" a certain component, this means that other components may be further provided rather than excluding other components unless specifically stated to the contrary.

The terms used in the present specification are only used to describe specific embodiments and are not intended to limit the present invention. Singular expressions include plural expressions unless the context clearly indicates otherwise. In the present specification, it is to be understood that terms such as "comprise" or "have" are intended to designate the presence of features, numbers, steps, actions, components, parts, or combinations thereof described in the specification but do not preclude the possibility of the presence or addition of one or more other features, numbers, steps, actions, components, parts, or combinations thereof.

In addition, the term "A/B composite nanoparticle" used in the present specification refers to a particle having a composite structure in which B particle is located on the surface of A particle.

In the present specification, PEM water electrolysis refers to a technology for obtaining oxygen and hydrogen by electrolyzing water using an electrolyte and a polymer electrolyte membrane as a separator and is composed of an anode, a cathode, and an ion exchange membrane which allows the generated hydrogen and oxygen gases to be separated from each other and the hydrogen ions to move from the anode to the cathode.

The respective electrode reactions in the PEM water electrolysis are as presented in the following Scheme 1:

Anode: 2H₂O -> 4H⁺ + 4e⁻ + O₂

Cathode: 4H⁺ + 4e⁻ → 2H₂

In an embodiment of the present invention, the catalyst for PEM water electrolysis may be an oxygen generating anode catalyst which directly affects the durability of the PEM water electrolysis device during the PEM water electrolysis reaction.

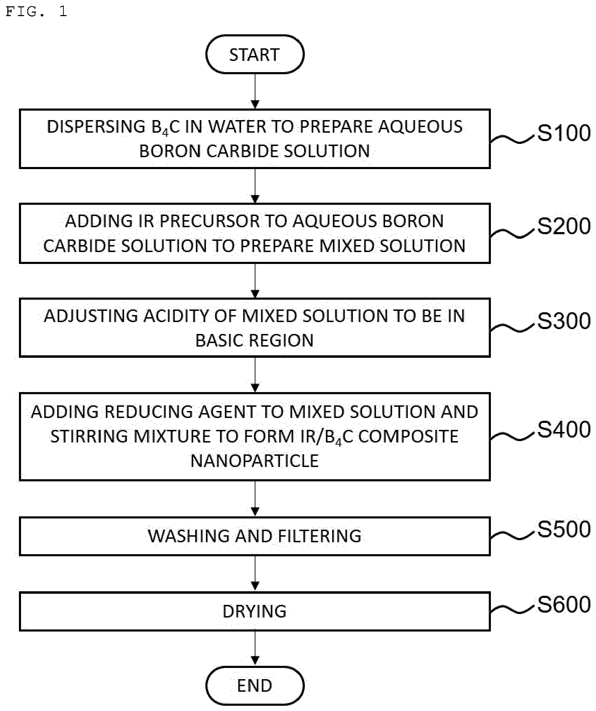

FIG. 1 is a flow chart of a method of preparing a catalyst for PEM water electrolysis of the present invention.

Referring to FIG. 1, the method of preparing a catalyst for PEM water electrolysis of the present invention includes a step (S100) of dispersing boron carbide (B₄C) in water to prepare an aqueous boron carbide solution; a step (S200) of adding an iridium (Ir) precursor to the aqueous boron carbide solution to prepare a mixed solution; a step (S300) of adjusting acidity of the mixed solution to be in a basic region; a step (S400) of adding a reducing agent to the mixed solution and stirring the mixture to form Ir/B₄C composite nanoparticles; a step (S500) of washing and filtering; and a step (S600) of drying.

First, the method of preparing a catalyst for PEM water electrolysis of the present invention includes a step (S100) of dispersing boron carbide (B₄C) in water to prepare an aqueous boron carbide solution.

In an embodiment of the present invention, the step (S100) of preparing an aqueous boron carbide solution may correspond to a prior step for forming iridium nanoparticles to be described below on the surface of boron carbide.

Boron carbide has a hardness lower than that of diamond or nitride but has a high hardness of 30 GPa or more and is a material used for manufacturing cartridge cases due to its high hardness.

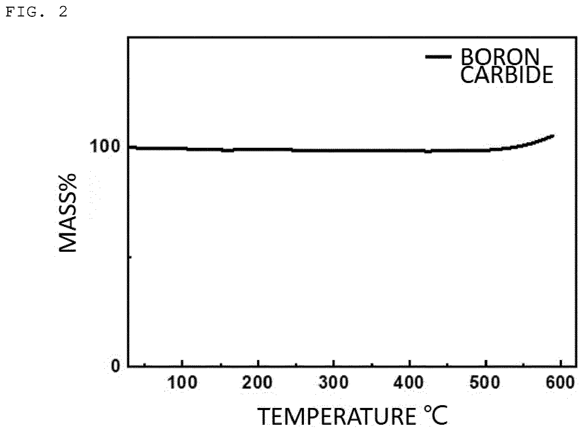

FIG. 2 is a graph illustrating the results of an experiment on the thermal stability of boron carbide.

Referring to FIG. 2, it can be seen that boron carbide can maintain stability even at a high temperature of 500°C or more. In addition, the electrical conductivity of boron carbide is about 3.3 S/cm to 4.3 S/cm, and these values are similar to 3.4 S/cm to 4.4 S/cm that are the electrical conductivity of carbon black.

In an embodiment of the present invention, boron carbide has excellent thermal stability and electrical conductivity, thus the method of preparing the catalyst for PEM water electrolysis of the present invention prepared using boron carbide as a support can provide a catalyst for PEM water electrolysis exhibiting excellent performance in the oxygen generation reaction and can further provide a PEM water electrolysis device with improved durability.

Next, the method of preparing a catalyst for PEM water electrolysis of the present invention includes a step (S200) of adding an iridium (Ir) precursor to the aqueous boron carbide solution to prepare a mixed solution; and a step (S300) of adjusting acidity of the mixed solution to be in a basic region.

The iridium precursor is a material for generating iridium and may be at least one compound selected from the group consisting of chloroiridic acid, iridium fluoride, iridium chloride, iridium bromide, iridium iodide, iridium acetate, iridium acetyl acetonate, iridium nitrate, and hydrates thereof, for example, chloroiridic acid.

Iridium corresponds to a representative anode catalyst for water electrolysis having a low price and a favorable oxygen generation efficiency and is used as a material for most conventional electrode catalysts for water electrolysis.

In an embodiment of the present invention, the iridium nanoparticles may include iridium metal, iridium oxide, and a combination thereof.

In an embodiment of the present invention, the step (S300) of adjusting the acidity of the mixed solution to be in a basic region may be performed by adjusting the pH to 9 to 11, for example, 10.

When the pH of the mixed solution is out of the above range, the iridium precursor may not be sufficiently reduced but may be continuously dissolved in the mixed solution and thus the Ir/B₄C composite nanoparticles may not be sufficiently formed in the next step (S400) of forming Ir/B₄C composite nanoparticles.

In order to adjust the acidity of the mixed solution to be in a basic region, the step (S300) may be performed by administering a basic solution, for example, KOH but is not limited thereto.

Next, the method of preparing a catalyst for PEM water electrolysis of the present invention includes a step (S400) of adding a reducing agent to the mixed solution and stirring the mixture to form Ir/B₄C composite nanoparticles.

In an embodiment of the present invention, the reducing agent is added to allow the precipitation reaction by a reduction reaction to proceed and may be, for example, NaBH₄ represented by the following Chemical Formula (1):

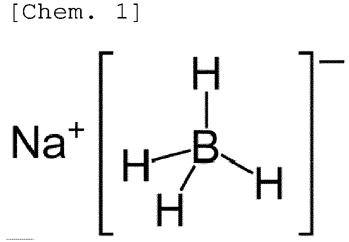

In an embodiment of the present invention, when the step (S400) of forming Ir/B₄C composite nanoparticles is performed, the iridium nanoparticles may be formed to be supported on the surface of the boron carbide particles. Specifically, the iridium nanoparticles may be formed on the surface of the boron carbide particles.

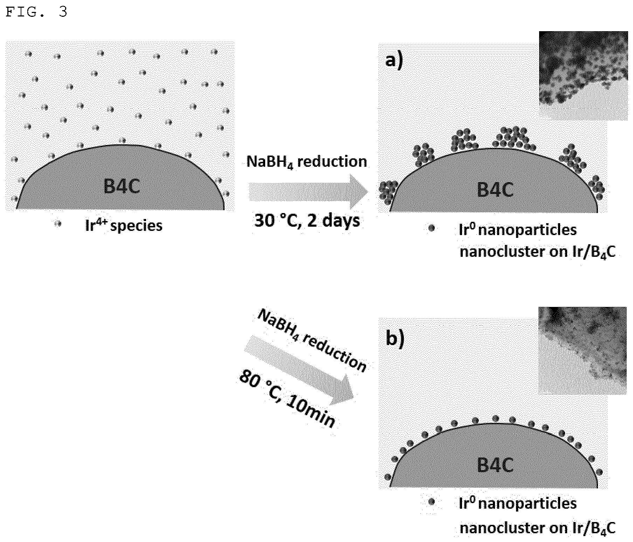

FIG. 3 is a schematic diagram of iridium nanoparticles formed on the surface of boron carbide particles in an embodiment of the present invention.

Referring to a) of FIG. 3, in an embodiment of the present invention, the step (S400) of forming Ir/B₄C composite nanoparticles may be performed at 20°C to 40°C, for example, 30°C, for 24 hours to 52 hours, for example, 48 hours. At this time, the iridium nanoparticles may be formed on the surface of the boron carbide particles, for example, the respective iridium nanoparticles may gather together to be formed in the form of a cluster having a grape cluster shape. The size of the respective iridium nanoparticles which gather together to be formed in the form of a cluster having a grape cluster shape may be 1 nm to 3 nm, for example, 1.5 nm to 2 nm.

Referring to b) of FIG. 3, in another embodiment of the present invention, the step (S400) of forming Ir/B₄C composite nanoparticles may be performed at 60°C to 100°C, for example, 80°C for 10 minutes to 60 minutes. At this time, through the temperature and execution time, the iridium nanoparticles may be uniformly dispersed and located on the surface of the boron carbide particles, for example, in the form of particles. The size of the respective iridium nanoparticles uniformly dispersed and located in the form of particles may be 1 nm to 3 nm, for example, 1.5 nm to 2 nm.

The above-described execution temperature and execution time may be factors that determine the shape of the iridium nanoparticles located on the surface of boron carbide. When the iridium nanoparticles are uniformly dispersed and located in the form of particles as illustrated in b) of FIG. 3, a larger surface area can be attained.

In an embodiment of the present invention, the iridium nanoparticles may include iridium metal, iridium oxide, and a combination thereof. The amount of iridium oxide that is pentavalent or higher iridium and is included in the iridium nanoparticles can be adjusted by controlling the above-described conditions of temperature and execution time.

In an embodiment of the present invention, when the step (S400) of forming Ir/B₄C composite nanoparticles is performed, the iridium nanoparticles may be formed to be supported on the surface of the boron carbide particles. The iridium nanoparticles may be formed to be contained at 5 wt% to 40 wt%, for example, 10 wt% to 20 wt% with respect to 100 wt% of the Ir/B₄C composite nanoparticles.

The content of the iridium nanoparticles can be controlled by adjusting the amount of boron carbide and the amount of the iridium precursor in the step (S100) of dispersing boron carbide (B₄C) in water to prepare an aqueous boron carbide solution and the step (S200) of adding an iridium (Ir) precursor to the aqueous boron carbide solution to prepare a mixed solution.

The Ir/B₄C composite nanoparticles may be in a form in which iridium is formed to be supported on the surface of boron carbide as a support, and thus the catalyst for PEM water electrolysis prepared by the method of preparing a catalyst PEM water electrolysis of the present invention may have a large surface area.

Next, the method of preparing a catalyst for PEM water electrolysis of the present invention may further include a step (S500) of washing and filtering; and a step (S600) of drying.

The step (S500) of washing and filtering is performed in order to increase the yield of the catalyst for PEM water electrolysis and is not limited as long as it is performed by a method that is obvious in the technical field of the present invention.

In an embodiment of the present invention, the step (S600) of drying may be performed at 50°C to 70°C, for example, 60°C.

The catalyst for PEM water electrolysis prepared by the method of preparing a catalyst for PEM water electrolysis of the present invention can exhibit OER performance with improved specific surface area, electrical conductivity, and durability for electrochemical activation since boron carbide that has greatly excellent chemical resistance and erosion resistance is used as a support and iridium is located on the surface of boron carbide in the catalyst for PEM water electrolysis.

An aspect of the present invention provides a catalyst for PEM water electrolysis containing a boron carbide support and iridium nanoparticles located on the surface of the boron carbide support.

In an embodiment of the present invention, boron carbide has excellent thermal stability and electrical conductivity, thus the catalyst for PEM water electrolysis of the present invention prepared using boron carbide as a support can provide a catalyst for PEM water electrolysis exhibiting excellent performance in the oxygen generation reaction and can further provide a PEM water electrolysis device with improved durability.

In an embodiment of the present invention, iridium corresponds to a representative anode catalyst for water electrolysis having a low price and a favorable oxygen generation efficiency and is used as a material for most conventional electrode catalysts for water electrolysis.

In an embodiment of the present invention, the iridium nanoparticles may include iridium metal, iridium oxide, and a combination thereof.

The iridium nanoparticles may be produced by reducing an iridium precursor. For example, the iridium precursor may be at least one compound selected from the group consisting of chloroiridic acid, iridium fluoride, iridium chloride, iridium bromide, iridium iodide, iridium acetate, iridium acetyl acetonate, iridium nitrate, and hydrates thereof, for example, chloroiridic acid.

In an embodiment of the present invention, the size of the iridium nanoparticles may be 1 nm to 3 nm, for example, 1.5 nm to 2 nm, and the iridium nanoparticles may be contained at 5 wt% to 70 wt%, for example, 10 wt% to 20 wt%, with respect to 100 wt% of the catalyst for PEM water electrolysis.

In an embodiment of the present invention, 100 wt% of the catalyst for PEM water electrolysis may correspond to 100 wt% of the Ir/B₄C composite nanoparticles.

In an embodiment of the present invention, the diameter of the boron carbide support may be 100 nm to 100 µm, and the BET surface area of the catalyst for PEM water electrolysis may be 10 m²/g to 500 m²/g, for example, 10 m²/g to 100 m²/g, for example, 67 m²/g.

The catalyst for PEM water electrolysis of the present invention may have a large surface area since iridium nanoparticles gather together on the surface of a boron carbide support having a diameter of 100 nm to 100 µm to be formed in the form of a cluster having a grape cluster shape or iridium nanoparticles in the form of particles are located to be uniformly dispersed and spaced. For this reason, PEM water electrolysis using the catalyst for PEM water electrolysis may exhibit OER performance with improved specific surface area, electrical conductivity, and durability for electrochemical activation.

### Example 1. Preparation of catalyst for PEM water electrolysis (preparation of nanocluster Ir/B₄C)

Boron carbide (B₄C) was dispersed in water to prepare 100 ml of aqueous boron carbide solution, 0.02 g of iridium chloride (H₂IrCl₆) as an iridium precursor was added to the aqueous boron carbide solution, and then the pH of the mixture was adjusted to 10.

Thereafter, NaBH₄ as a reducing agent was added to the mixture, and the resultant mixture was stirred at 30°C for 48 hours, then washed and filtered, and dried at 60°C for 12 hours, thereby preparing a catalyst for PEM water electrolysis (nanocluster Ir/B₄C) in which iridium nanoparticles were formed on the surface of boron carbide by 10 wt% in the form of cluster.

Examples 2 to 4. Preparation of catalyst for PEM water electrolysis (preparation of nanoparticle Ir/B₄C)

Catalysts for PEM water electrolysis (nanoparticle Ir/B₄C) in which iridium nanoparticles were formed to be uniformly dispersed on the surface of boron carbide by 20 wt% in the form of particles were prepared by performing the same method as in Example 1 except that stirring was performed at 60°C, 80°C, or 100°C for 10 minutes instead of performing stirring at 30°C for 48 hours in Example 1.

Experimental Example 1. Analysis of Ir/B₄C composite nanoparticle

### 1.1. Nanocluster Ir/B₄C

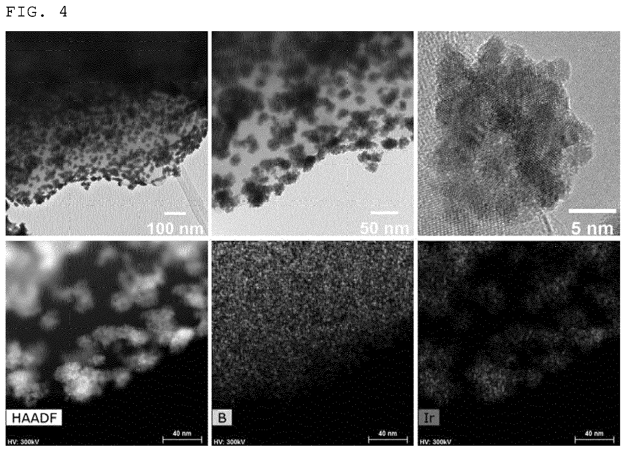

The TEM analysis of the catalyst for PEM water electrolysis (nanocluster Ir/B₄C) of Example 1 was performed, and the results are illustrated in FIG. 4.

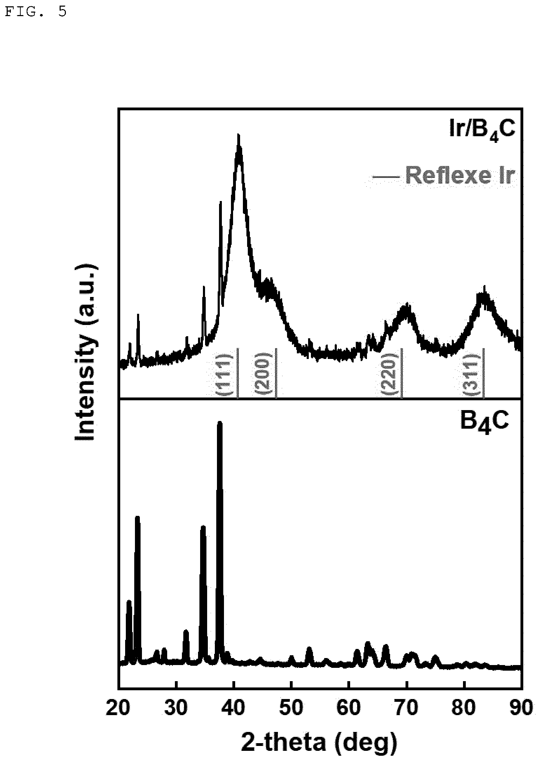

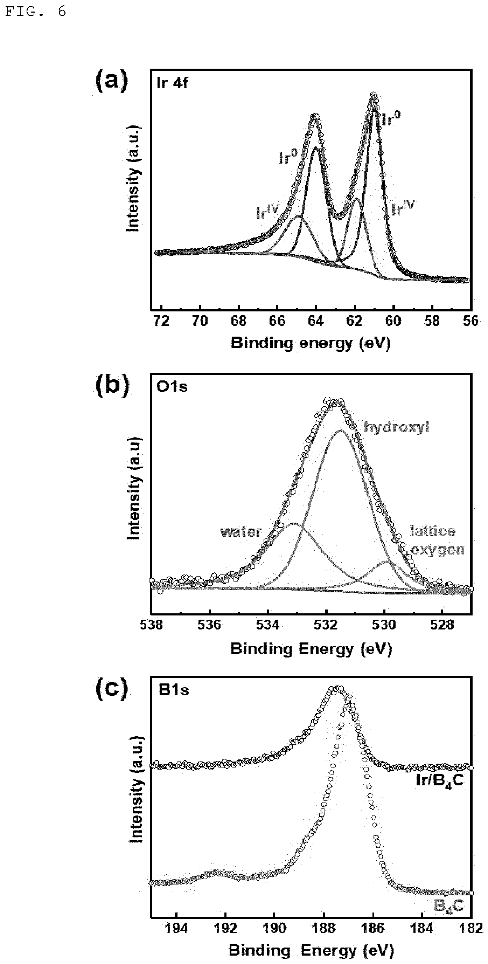

The XRD analysis of the catalyst for PEM water electrolysis (nanocluster Ir/B₄C) of Example 1 and the control group (B₄C) was performed and the results are illustrated in FIG. 5, the XPS analysis was performed and the results are illustrated in FIG. 6, and an experiment for BET analysis was performed and the results are presented in the following Table 1.

**[Table 1]**

| | Control group (B₄C) | Example 1 (nanocluster Ir/B₄C) |
|---|---|---|
| Surface area [m² g⁻¹] | 13.09 | 67.14 |
| Total pore volume [cm³ g⁻¹] | 0.025 | 0.095 |
| Average pore diameter [nm] | 7.9 | 5.7 |
| Mesoporous pore volume [cm³ g⁻¹] | 0.023 | 0.067 |

Referring to FIGS. 4 and 5, it has been confirmed that small primary iridium nanoparticles were self-assembled to be formed on the surface of boron carbide in the form of a cluster having a grape cluster shape.

Referring to Table 1, it is confirmed that the specific surface area of the catalyst for PEM water electrolysis (nanocluster Ir/B₄C) of Example 1 was increased as compared with that of the control group since iridium particles are formed on the surface of the boron carbide support. Referring to a) and b) of FIG. 6, it is confirmed that tetravalent iridium is present in the catalyst for PEM water electrolysis (nanocluster Ir/B₄C) of Example 1 and a hydroxyl group that is weakly bound onto the surface of iridium is present, and it is expected through this fact that the catalyst for PEM water electrolysis (nanocluster Ir/B₄C) of Example 1 can increase the specific activity for oxygen generation.

In addition, referring to c) of FIG. 6, it is confirmed that the spectrum of the catalyst for PEM water electrolysis (nanocluster Ir/B₄C) of Example 1 showed an upward shift as compared with the spectrum of the control group (B₄C), and it is expected through this fact that the catalyst for PEM water electrolysis may be useful for stabilizing the iridium nanoparticles in an acidic medium at a high potential.

### 1.2. Nanoparticle Ir/B₄C

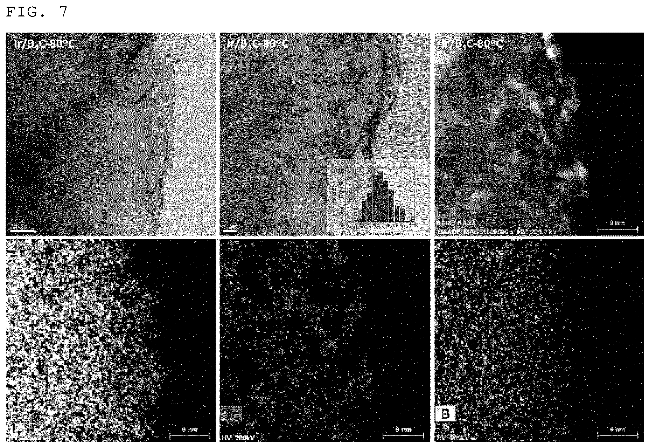

The TEM analysis of the catalyst for PEM water electrolysis (nanoparticle Ir/B₄C) of Example 3 was performed, and the results are illustrated in FIG. 7.

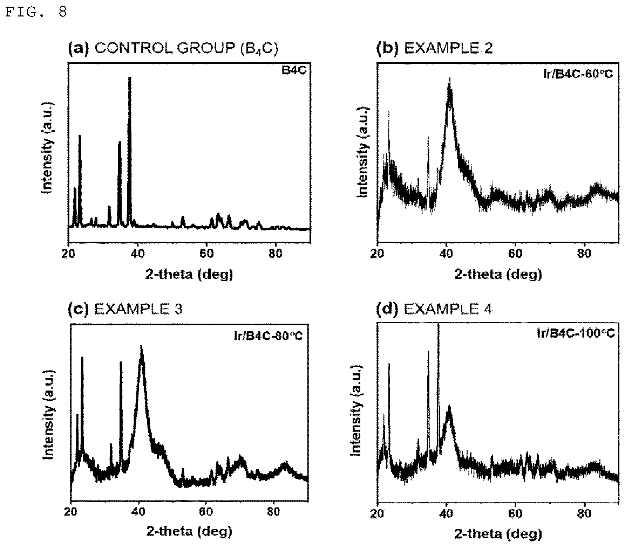

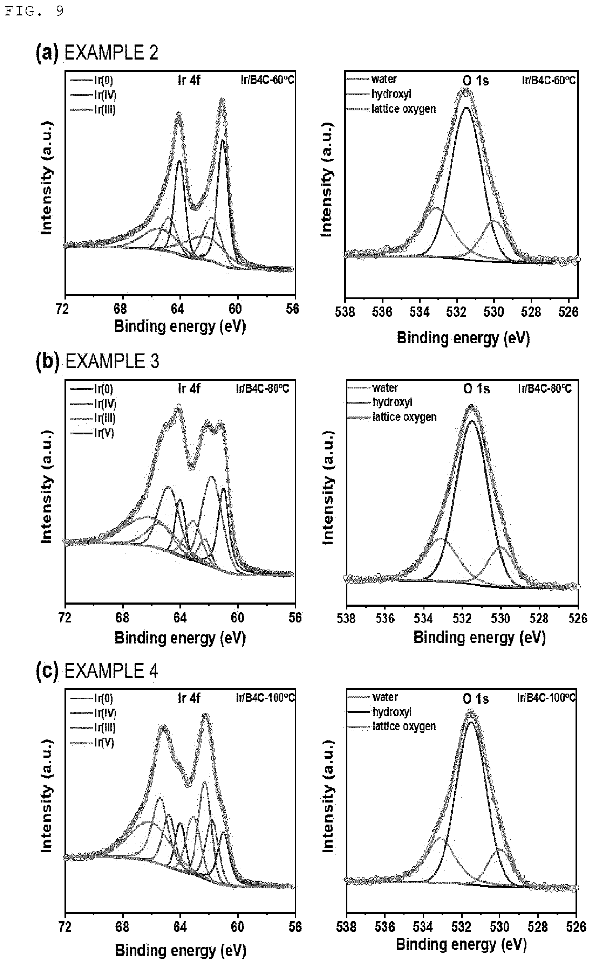

The XRD analysis of the catalysts for PEM water electrolysis (nanoparticle Ir/B₄C) of Examples 2 to 4 and the control group (B₄C) was performed, and the results are illustrated in FIG. 8, and the XPS analysis was performed and the results are illustrated in FIG. 9.

Referring to FIGS. 7 and 8, it is confirmed that iridium nanoparticles are favorably dispersed on the surface of boron carbide and located in the form of particles and the sizes of the iridium particles are in a range of 0.5 nm to 3.0 nm and the average thereof is about 1.5 nm to 2.0 nm.

Referring to FIG. 9, it is found that as the temperature for the reduction reaction increases, there are more amount of iridium in a higher oxidation state and a greater number of weak hydroxyl groups present on the surface of iridium. It is expected through this fact that it is possible to increase the specific activity for oxygen generation and the performance as a catalyst for PEM water electrolysis is excellent in the case of Example 3 (80°C) and Example 4 (100°C) as compared with Example 2 (60°C).

### Experimental Example 2. Confirmation of OER activity

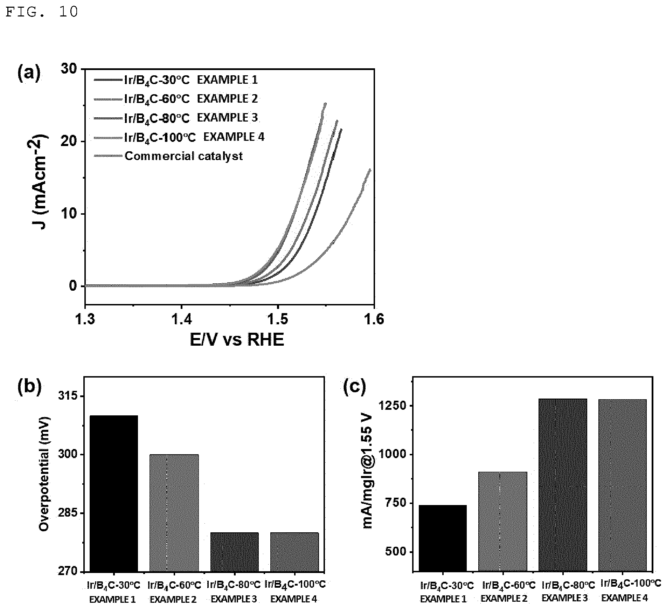

The OER activity of the catalysts for PEM water electrolysis of Examples 1 to 4 and a commercial catalyst (Comparative Example) was confirmed ,and the results are illustrated in FIG. 10.

Specifically, a) of FIG. 10 is an LSV graph for an electrochemical oxidation reaction, b) of FIG. 10 is an overpotential graph, and c) of FIG. 10 is a current density graph.

Referring to FIG. 10, it is found that the catalysts for PEM water electrolysis of Examples 1 to 4 are superior to the commercial catalyst in performance.

In addition, by comparing the catalysts for PEM water electrolysis of Examples 1 to 4 with each other, it is confirmed that as the temperature for the reduction reaction increases, the overpotential decreases, the current density increases, a catalyst for PEM water electrolysis prepared at a higher temperature exhibits superior OER activity. It is expected that this is because iridium nanoparticles are more favorably dispersed and located on the surface of boron carbide as the temperature for the reduction reaction increases.

### Experimental Example 3. Confirmation of durability

### 3.1. Comparison with commercial catalyst

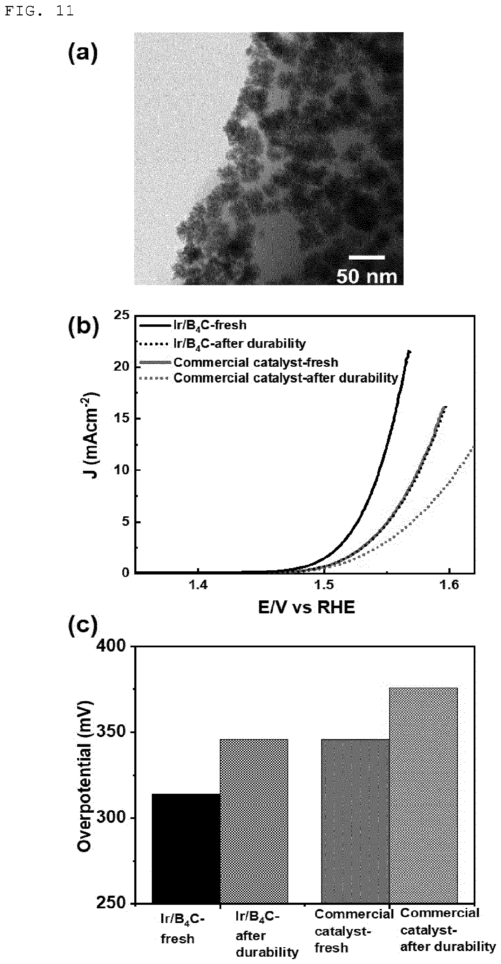

The durability of the catalyst for PEM water electrolysis (nanocluster Ir/B₄C) of Example 1 and a commercial catalyst (Comparative Example) were examined under the conditions of 1 mA/cm² and 15 hours and illustrated in FIG. 11.

Specifically, a) of FIG. 11 is a TEM image of the catalyst for PEM water electrolysis of Example 1 after the experiment for durability examination, b) of FIG. 11 is an LSV comparison graph for an electrochemical oxidation reaction, and c) of FIG. 11 is an overpotential comparison graph.

Referring to a) of FIG. 11, it is confirmed that the iridium nanoparticles are not detached from the surface of the boron carbide support even after the experiment for durability examination.

Referring to b) and c) of FIG. 11, it is confirmed that the durability of the catalyst for PEM water electrolysis (nanocluster Ir/B₄C) of Example 1 is similar to that of a commercial catalyst (Comparative Example), and it is expected that this is because iridium nanoparticles are located on the surface of boron carbide in the form of cluster and thus the iridium nanoparticles do not all come into contact with boron carbide.

### 3.2. Comparison of Examples

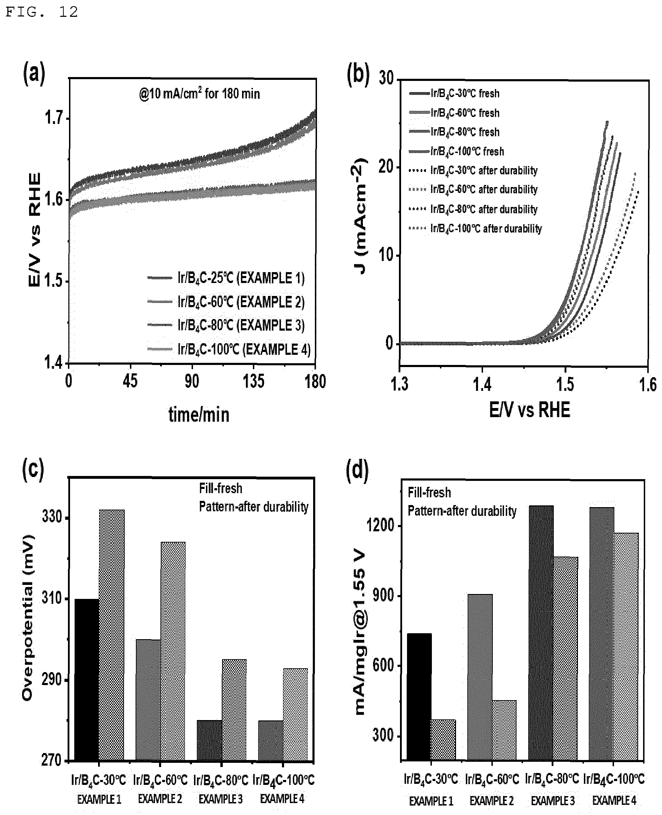

The durability of the catalysts for PEM water electrolysis of Examples 1 to 4 were examined under the conditions of 10 mA/cm² and 3 hours and illustrated in FIG. 12.

Specifically, a) of FIG. 12 is an E/V vs RHE graph over time, b) of FIG. 12 is an LSV graph, c) of FIG. 12 is an overpotential comparison graph, and d) of FIG. 12 is a current density comparison graph.

Referring to FIG. 12, it is confirmed that the catalysts for PEM water electrolysis of Examples 3 and 4 are superior to the catalysts for PEM water electrolysis of Examples 1 and 2 in durability. It is found that this is because the iridium nanoparticles of the catalysts for PEM water electrolysis of Examples 3 and 4 are all in direct contact with the boron carbide support, and it is expected that such a metal-support (iridium-boron carbide) interaction may be useful for stabilizing iridium nanoparticles in an acidic medium.

### Experimental Example 4. Comparison of Example 1 with Example 3 (Comparison of nanocluster Ir/B₄C with nanoparticle Ir/B₄C)

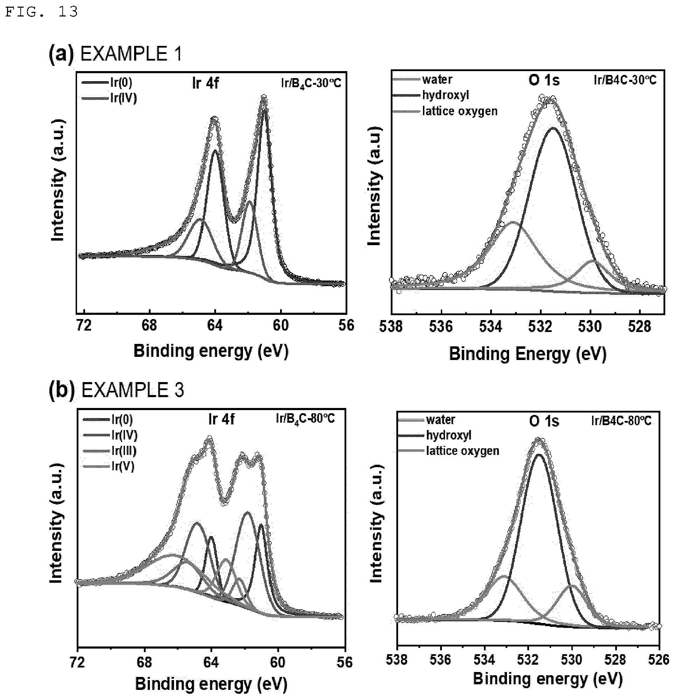

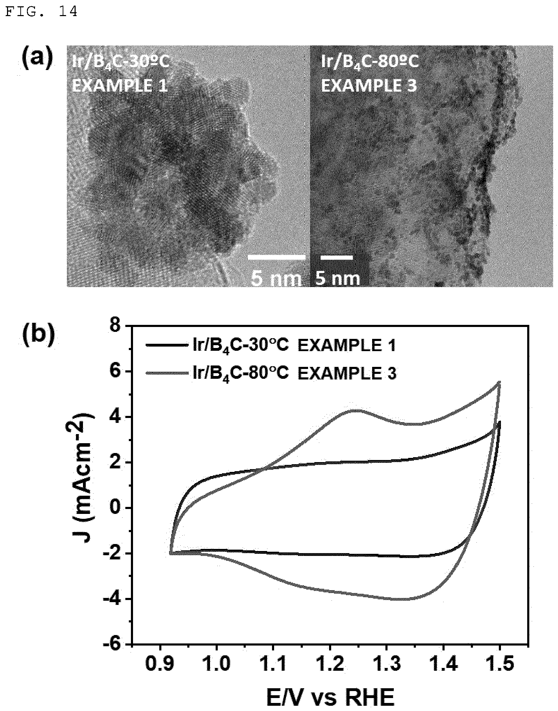

The XPS analysis results of the catalyst for PEM water electrolysis (nanocluster Ir/B₄C) of Example 1 and the catalyst for PEM water electrolysis (nanoparticle Ir/B₄C) of Example 3 are illustrated in FIG. 13, and (a) a TEM image and (b) a current density graph according to E/V vs RHE are illustrated in FIG. 14.

Referring to FIGS. 13 and 14, it is confirmed that in the case of the catalyst for PEM water electrolysis (nanoparticle Ir/B₄C) of Example 3, as compared with the catalyst for PEM water electrolysis (nanocluster Ir/B₄C) of Example 1, the iridium nanoparticles are more favorably separated and located on the surface of boron carbide, the ratio of tetravalent iridium to trivalent iridium is higher, the content of hydroxide on the surface is higher, and the OER activity is superior.

The catalyst for PEM water electrolysis (nanoparticle Ir/B₄C) of Example 3 has a greater number of iridium nanoparticles in direct contact with the boron carbide support as compared with the catalyst for PEM water electrolysis (nanocluster Ir/B₄C) of Example 1, and it is expected that such a metal-support (iridium-boron carbide) interaction may be useful for stabilizing iridium nanoparticles in an acidic medium.

The catalyst for PEM water electrolysis prepared by the method of preparing a catalyst for PEM water electrolysis of the present invention can exhibit OER performance with improved specific surface area, electrical conductivity, and durability for electrochemical activation since boron carbide that has greatly excellent chemical resistance and erosion resistance is used as a support and iridium is located on the surface of boron carbide in the catalyst for PEM water electrolysis.

The effects of the present invention are not limited to the above effects and should be understood to include all effects that can be inferred from the configuration of the invention described in the detailed description or claims of the present invention.

The above description of the present invention is for illustrative purposes only, and those skilled in the art to which the present invention pertains will appreciate that it is possible to easily transform the present invention into other specific forms without changing the technical spirit or essential features of the present invention. Therefore, it should be understood that the embodiments described above are illustrative in all respects and not limiting. For example, each component described as a single type may be implemented in a distributed manner, and similarly, components described as being distributed may also be implemented in a combined form.

The scope of the present invention is indicated by the claims to be described later, and all changes or modified forms derived from the meaning and scope of the claims and their equivalent concepts should be interpreted as being included in the scope of the present invention.

## Claims

1. A method of preparing a catalyst for PEM water electrolysis, the method comprising:
a step of dispersing boron carbide (B₄C) in water to prepare an aqueous boron carbide solution;
a step of adding an iridium (Ir) precursor to the aqueous boron carbide solution to prepare a mixed solution;
a step of adjusting acidity of the mixed solution to be in a basic region; and
a step of adding a reducing agent to the mixed solution and stirring the mixture to form Ir/B₄C composite nanoparticles.

2. The method of preparing a catalyst for PEM water electrolysis according to claim 1, wherein the step of adjusting the acidity to be in a basic region is performed by adjusting pH to 9 to 11.

3. The method of preparing a catalyst for PEM water electrolysis according to claim 1, wherein iridium nanoparticles are formed on a surface of boron carbide particles in the step of forming Ir/B₄C composite nanoparticles.

4. The method of preparing a catalyst for PEM water electrolysis according to claim 1, wherein iridium nanoparticles are formed to be contained at 5 wt% to 40 wt% with respect to 100 wt% of Ir/B₄C composite nanoparticles in the step of forming Ir/B₄C composite nanoparticles.

5. The method of preparing a catalyst for PEM water electrolysis according to claim 1, the method further comprising: a step of washing and filtering; and a step of drying after the step of forming Ir/B₄C composite nanoparticles.

6. The method of preparing a catalyst for PEM water electrolysis according to claim 5, wherein the step of drying is performed at 50°C to 70°C.

7. The method of preparing a catalyst for PEM water electrolysis according to claim 1, wherein the iridium precursor is at least one compound selected from the group consisting of chloroiridic acid, iridium fluoride, iridium chloride, iridium bromide, iridium iodide, iridium acetate, iridium acetyl acetonate, iridium nitrate, and hydrates thereof.

8. The method of preparing a catalyst for PEM water electrolysis according to claim 1, wherein the step of forming Ir/B₄C composite nanoparticles is performed at a temperature of 60°C to 100°C for 10 to 60 minutes.

9. The method of preparing a catalyst for PEM water electrolysis according to claim 8, wherein iridium nanoparticles are formed to be dispersed and located on a surface of boron carbide particles in the step of forming Ir/B₄C composite nanoparticles.

10. The method of preparing a catalyst for PEM water electrolysis according to claim 9, wherein a size of the iridium nanoparticles is 1 nm to 3 nm.

11. A catalyst for PEM water electrolysis comprising:
a boron carbide support; and
iridium nanoparticles located on a surface of the boron carbide support.

12. The catalyst for PEM water electrolysis according to claim 11, wherein the iridium nanoparticles are contained at 5 wt% to 40 wt% with respect to 100 wt% of the catalyst for PEM water electrolysis.

13. The catalyst for PEM water electrolysis according to claim 11, wherein the iridium nanoparticles include iridium metal, iridium oxide, and a combination thereof.

14. The catalyst for PEM water electrolysis according to claim 11, wherein a diameter of the boron carbide support is 100 nm to 100 µm.

15. The catalyst for PEM water electrolysis according to claim 11, wherein a BET surface area of the catalyst for PEM water electrolysis is 10 m²/g to 500 m²/g.

16. The catalyst for PEM water electrolysis according to claim 11, wherein the iridium nanoparticles are dispersed and located on a surface of the boron carbide particles.

17. The catalyst for PEM water electrolysis according to claim 16, wherein a size of the iridium nanoparticles is 1 nm to 3 nm.
